# EUROPÄISCHE PATENTSCHRIFT

(11) **EP 0 826 456 B1**
(45) Veröffentlichungstag und Bekanntmachung des Hinweises auf die Patenterteilung: **13.02.2002**
(21) Anmeldenummer: 97114326.8
(22) Anmeldetag: 20.08.1997
(51) Int. Cl.: B23K 9/167

(54) **Schutzgasgemisch für Verwendung beim Wolfram-Inertgas-Schweissen**
Protecting gas mixture used in TIG welding
Mélange de gaz de protection, utilisé en soudage TIG

(30) Priorität: 03.09.1996 DE 19635497
(43) Veröffentlichungstag der Anmeldung: 04.03.1998
(73) Patentinhaber: MESSER GRIESHEIM GMBH, 60547 Frankfurt (DE)
(72) Erfinder: Koller, Helmuth, 8911 Admont (AT)

(56) Entgegenhaltungen:
- EP-A- 0 163 379
- US-A- 5 306 358
- PATENT ABSTRACTS OF JAPAN vol. 9, no. 70 (M-367) [1793] , 30.März 1985 & JP 59 202182 A (TOYODA CHUO KENKYUSHO K.K.), 15.November 1984,

## Beschreibung

Die Erfindung betrifft ein Schutzgasgemisch zur Verwendung beim Wolfram-lnertgas-Schweißen. Insbesondere betrifft die Erfindung ein Schutzgasgemisch zur Verwendung beim Wolfram-Inertgas-Orbital-Schweißen (WIG-Orbital-Schweißen) von Rohren aus austenitischen Werkstoffen, das heißt korrosionsbeständigen Stählen, wie sie insbesondere in der chemischen Industrie eingesetzt werden.

Beim WIG-Schweißen brennt ein Lichtbogen in einem Schutzgasstrom aus inertem Gas zwischen der Wolfram-Elektrode und dem Werkstück. Als Schutzgas wird üblicherweise Argon verwendet.

EP-A-0 163 379 zeigt ein Schutzgasgemisch, das einen Volumenanteil von 2,0-25 % N₂, Rest Argon enthält.

Bei typischen austenitischen Stählen beträgt der Ferritgehalt ca. 4 - 5%. Aufgrund der Erhitzung durch den Lichtbogen sammelt sich an der Schweißstelle das Ferrit, und es bilden sich sogenannte Ferritnester. Solche Ferritnester führen zu Korrosion der Schweißnaht.

Der Erfindung liegt die Aufgabe zugrunde, ein Schutzgasgemisch zur Verwendung beim WIG-Schweißen insbesondere von austenitischen Stählen zu schaffen, welches die Korrosionsanfälligkeit der Schweißnaht auf ein Maß entsprechend dem Korrosionsverhalten des Grundwerkstoffes absenkt.

Zur Lösung dieser Aufgabe enthält ein Schutzgasgemisch gemäß der Erfindung eine Beimischung von N₂ in einem Volumenanteil von 2,0 - 3,7% und von H₂ in einem Volumenanteil von 0,5 - 1,2% zum Grundbestandteil Argon.

Beim WIG-Schweißen unter Verwendung des erfindungsgemäßen Schutzgasgemisches wird der Ferritgehalt an der Schweißstelle / in der Schweißnaht auf ein Maß abgesenkt, das in etwa dem Ferritgehalt des Grundwerkstoffs entspricht. Dadurch wird einer Korrosionsanfälligkeit der Schweißnaht vorgebeugt.

N₂ ist als Austenitbildner bekannt. Ein Schutzgasgemisch mit einer Zugabe von N₂ allein zu Argon würde jedoch beim WIG-Schweißen zu einem schnellen Verschleiß der Wolfram-Elektrode führen. Dem wirkt jedoch die Zugabe von H₂ im angegebenen Volumenanteil entgegen.

Ein in der Praxis erprobtes Schutzgasgemisch hat die folgenden Anteile: 3% N₂; 0,7% H₂, Rest Argon. Standzeitversuche mit einem solchen Schutzgasgemisch haben sowohl hinsichtlich der Reduzierung des Ferritgehaltes an der Schweißstelle als auch hinsichtlich einer Erhöhung der Wolfram-Elektrodenstandzeit zu guten Ergebnissen geführt.

## Patentansprüche

1. Schutzgasgemisch zur Verwendung beim WIG-Schweißen von austenitischen Werkstoffen, das
einen Volumenanteil von 2,0 - 3,7% N₂; einen Volumenanteil von 0,5 1,2% H₂; Rest Argon enthält.

2. Schutzgasgemisch nach Anspruch 1,
**dadurch gekennzeichnet,**
**daß** die Volumenanteile an N₂ 3% und an H₂ 0,7% betragen.

## Claims

1. Shielding gas mixture for use in the TIG welding of austenitic materials, which contains from 2.0-3.7% by volume of N₂; from 0.5-1.2% by volume of H₂; remainder argon.

2. Shielding gas mixture according to Claim 1, **characterized in that** the mixture contains 3% by volume of N₂ and 0.7% by volume of H₂.

## Revendications

1. Mélange de gaz protecteur applicable au soudage TIG de matières austénitiques contenant selon un pourcentage volumique :
2,0-3,7 % N₂, une partie en volume de 0,5-1,2 % H₂ et le reste est de l'argon.

2. Mélange de gaz protecteur selon la revendication 1,
**caractérisé en ce que**
les parties en volume d'azote N₂ représentent 3 % et celles en H₂ représentent 0,7 %.
